Europäisches Patentamt

European Patent Office

Office européen des brevets

(19)

(11) Numéro de publication : **0 135 689**
B1

(12)

# FASCICULE DE BREVET EUROPÉEN

(45) Date de publication du fascicule du brevet :
29.07.87

(21) Numéro de dépôt : 84108044.3

(22) Date de dépôt : 10.07.84

(51) Int. Cl.⁴ : **H 01 B   3/40**, C 08 G   59/40,
C 08 G   18/00, H 01 B   3/30

(54) Procédé et dispositif d'isolation par imprégnation d'un bobinage, et vernis sans solvant stabilisé utilisable dans ce procédé et ce dispositif.

(30) Priorité : 13.07.83 FR 8311723

(43) Date de publication de la demande :
03.04.85 Bulletin 85/14

(45) Mention de la délivrance du brevet :
29.07.87 Bulletin 87/31

(84) Etats contractants désignés :
AT BE CH DE FR GB IT LI SE

(56) Documents cités :
US-A- 3 020 262
US-A- 3 313 747
US-A- 3 334 110
US-A- 3 876 618
CHEMICAL ABSTRACTS, vol. 85, no. 2, 12 juillet 1976,
page 24, no. 6351s, Columbus, Ohio, US;

(73) Titulaire : **ALSTHOM**
38, avenue Kléber
F-75784 Paris Cédex 16 (FR)

(72) Inventeur : **Anton, Alain**
Rue de Beauregard Chaponnay
F-69360 Saint-Symphorien d'Oron (FR)

(74) Mandataire : Weinmiller, Jürgen et al
Lennéstrasse 9 Postfach 24
D-8133 Feldafing (DE)

**0 135 689**

**Description**

La présente invention concerne un procédé d'isolation par imprégnation d'un bobinage électrique à l'aide de résines à cycles isocyanurates et oxazolidones, dans lequel on enroule autour des conducteurs un ruban de tissu de verre et de papier de mica poreux chargé d'un sel d'ammonium quaternaire catalysant la condensation de dérivés isocyanate et époxy en cycles isocyanurates et oxazolidones, on imprègne le ruban d'un vernis comprenant un dérivé isocyanate et une résine époxy liquide, puis on soumet le ruban imprégné à un traitement thermique de polymérisation du vernis. Elle s'étend en outre à un dispositif d'isolation obtenu par ce procédé, et à un vernis sans solvant utilisable dans ce procédé et ce dispositif.

On a déjà proposé dans les documents FR-A-2 207 952, 2 242 419 et 2 427 673, de fabriquer un isolant de bobinage électrique par condensation d'un dérivé isocyanate et d'un dérivé époxy en présence d'un catalyseur favorisant la formation de cycles isocyanurates et oxazolidones, ce catalyseur pouvant être constitué par un sel d'ammonium quaternaire contenant un radical alkyle à longue chaîne comportant au moins 8 atomes de carbone.

Selon le document FR-A 2 427 673, on a également proposé d'incorporer un catalyseur de durcissement du groupe des imidazoles dans un ruban de mica sur support de verre, imprégné d'une résine de silicone, et séché, d'imprégner le ruban isolant obtenu à l'aide d'un vernis constitué par un mélange de dérivés isocyanate et époxy, puis de le durcir par chauffage. Toutefois les sels d'ammonium quaternaire contenant un radical alkyle à longue chaîne sont très solubles dans la résine d'imprégnation du ruban, de sorte qu'ils migrent facilement du ruban dans le bain d'imprégnation et qu'ils produisent une augmentation de viscosité prématurée du vernis au cours de l'opération d'imprégnation, qui s'effectue par opérations successives alternées de mise sous vide, puis sous pression, ce qui entraîne une imprégnation plus difficile et imparfaite. Par ailleurs, les vernis sans solvant à base de dérivés isocyanates et époxy présentent une augmentation progressive de viscosité au stockage, ce qui réduit leur durée de conservation possible en fûts et en cuve.

L'invention a donc pour but de procurer un procédé permettant d'éviter toute augmentation prématurée de la viscosité de la résine d'imprégnation du ruban, et assurant ainsi une imprégnation relativement facile et bien homogène, ainsi qu'un dispositif obtenu par ce procédé. Elle a encore pour but de permettre la conservation des vernis à base de dérivés isocyanate et époxy pendant de longues durées de stockage avant leur utilisation..

Le procédé selon l'invention est caractérisé en ce que l'on emploie comme sel d'ammonium quaternaire catalyseur un halogénure de benzyl-trialkylammonium à chaîne alkyle contenant au plus 3 atomes de carbone.

Il répond en outre de préférence à au moins l'une des caractéristiques suivantes :

L'halogénure de benzyl-trialkylammonium est le chlorure de benzyl-triméthylammonium ou le chloure de benzyl-triéthylammonium.

L'on incorpore l'halogénure de benzyltrialkylammonium à l'état solide au ruban de tissu de verre et de papier de mica poreux.

La proportion d'halogénure de benzyltrialkylammonium est de 0,2 à 5 %, et de préférence 0,8 à 1,5 % en poids du vernis de l'isolation finale.

Le vernis est additionné d'un inhibiteur de condensation constitué par un acide minéral ou organique, un anhydride organique ou un composé organique capteur d'électrons π.

L'inhibiteur est l'anhydride maléique, l'anhydride phtalique ou l'anhydride acétique, l'hydroquinone, la benzoquinone ou l'azobisisobutyrolactone.

La quantité d'inhibiteur ajoutée au vernis est comprise entre 0,02 et 1 % en poids, et de préférence entre 0,05 et 0,3 % en poids.

Le vernis comprend 7 à 25 équivalents isocyanate pour un équivalent époxy.

L'invention s'étend en outre à un vernis sans solvant à base de dérivés isocyanate et de résines époxydes liquides stabilisé contre l'accroissement de viscosité au stockage caractérisé en ce qu'il contient de 0,02 à 1 % en poids, et de préférence de 0,05 à 0,3 % en poids, rapportés où la masse totale du vernis, d'un inhibiteur constitué par un acide minéral ou organique ou un anhydride organique, ou bien un composé organique capteur d'électrons π.

De préférence l'inhibiteur est constitué par un composé du groupe formé par l'acide phosphorique, l'anhydride maléique, l'anhydride acétique, l'anhydride phtalique, l'hydroquinone, la benzoquinone et l'azobisisobutyrolactone.

Comme résines époxydes, on peut utiliser :

les résines diglycidyléther, du bisphénol A, du bisphénol F liquides comportant peu de groupements hydroxyle libres, d'équivalent époxyde compris entre 170 et 300,

les résines époxydes novolaque d'équivalent époxyde 160 à 230 dérivées des novolaques du phénol, du crésol, des acides crésyliques, du bisphénol A.

les résines époxydes cycloaliphatiques liquides telles que celles commercialisées par la société Ciba-Geiby sous les désignations CY 192 ou CY 179.

Comme dérivés diisocyanates, on peut utiliser :

2

des diisocyanates tels que le 4,4-diphénylméthane diisocyanate, les 2,4-et 2,6-toluène diisocyanate, le 3,5-diisocyanate de naphtalène, le 1,4-diisocyanate de cyclohexane,

le triisocyanate de triphénylméthane, le tétraisocyanate de 3,3'-4,4' diphénylméthane.

Les isocyanates peuvent être utilisés seuls ou en mélanges.

L'avantage de l'emploi de chlorure de benzyl-triméthylammonium comme catalyseur réside dans son insolubilité totale dans le vernis d'imprégnation jusqu'à une température de 100 °C. Le chlorure de benzyltriéthylammonium peut aussi être utilisé avantageusement, mais il présente une légère solubilité dans le vernis d'imprégnation vers 60 °C.

Le dispositif d'isolation par imprégnation d'un bobinage électrique selon l'invention, comprenant un ruban de tissu de verre et de papier de mica poreux chargé d'un sel d'ammonium quaternaire catalysant la condensation de dérivés isocyanates et époxy en cycles isocyanurates et oxazolidones, imprégné d'un vernis formé à partir d'un dérivé isocyanate et d'une résine époxy liquide, durcis par traitement thermique en présence de sel d'ammonium quaternaire, est caractérisé en ce que le sel d'ammonium quaternaire est un halogénure de benzyl-trialkylammonium à chaîne alkyle contenant au plus 3 atomes de carbone.

Les exemples suivants décrivent des modes de mise en œuvre de l'invention. Les caractéristiques physiques et mécaniques des résines d'imprégnation des exemples 1 à 8 ci-dessous, et les caractéristiques électriques des isolants après imprégnation et polymérisation, sont données respectivement dans les tableaux I et II qui les suivent. Les pourcentages sont indiqués en poids.

### Exemple 1

On imprègne un ruban dit « poreux » formé de papier de mica et d'un tissu de verre collé par une résine époxyde sur le papier de mica, contenant 1 g/m² de chlorure de benzyl-triméthylammonium, avec un vernis composé de :

| | |
|---|---|
| 4,4'-diphénylméthane diisocyanate | 92,9 % |
| résine époxyde du bisphénol A (équivalent époxy 178) | 7 % |
| anhydride maléique | 0,1 % |

### Exemple 2

On imprègne le même ruban que dans l'exemple 1 avec le vernis composé de :

| | |
|---|---|
| 4,4'-diphénylméthane diisocyanate | 92,9 % |
| résine époxyde novolaque (équivalent époxy 172) | 7 % |
| anhydride maléique | 0,1 % |

### Exemple 3

On imprègne le même ruban que dans l'exemple 1 avec le vernis composé de :

| | |
|---|---|
| 4,4'-diphénylméthane diisocyanate | 79,8 % |
| résine époxyde de bisphénol A (équivalent époxy 178) | 20 % |
| anhydride maléique | 0,2 % |

### Exemple 4

On imprègne le même ruban que dans l'exemple 1 avec le vernis composé de :

| | |
|---|---|
| 2,4-toluène diisocyanate 80 % en poids | |
| 2,6-toluène diisocyanate 20 % en poids | 92,9 % |
| résine époxy du bisphénol A | 7 % |
| anhydride phtalique | 0,1 % |

### Exemple 5

On imprègne le même ruban que dans l'exemple 1 avec le vernis composé de :

| | |
|---|---|
| 2,4-toluène diisocyanate 80 % en poids | |
| 2,6-toluène diisocyanate 20 % en poids | 92,8 % |
| résine époxyde novolaque (équivalent époxy 170) | 7 % |
| anhydride acétique | 0,2 % |

### Exemple 6

3

On imprègne le même ruban que dans l'exemple 1 avec le vernis composé de :

| | |
|---|---|
| 4,4'-diphénylméthane diisocyanate | 92,9 % |
| résine époxyde novolaque (équivalent époxy 170) | 4,7 % |
| résine époxyde du bisphénol A (équivalent époxy 178) | 2,3 % |
| anhydride maléique | 0,1 % |

### Exemple 7

On imprègne le même ruban que dans l'exemple 1 avec le vernis composé de :

| | |
|---|---|
| 4,4'-diphénylméthane diisocyanate | 92,9 % |
| résine époxyde alicyclique (équivalent époxy 170) | 7 % |
| anhydride phtalique | 0,1 % |

### Exemple 8

On imprègne le même ruban que dans l'exemple 1 avec le vernis composé de :

| | |
|---|---|
| 2,4-toluène diisocyanate 80 % en poids | |
| 2,6-toluène diisocyanate 20 % en poids | 79,8 % |
| résine époxyde novolaque (équivalent époxy 170) | 20 % |
| anhydride maléique | 0,2 % |

(Voir Tableaux 1 et 2 pages suivantes)

### Exemple 9

On prépare un vernis composé de :

| | |
|---|---|
| 4-4' Diphényl méthane diisocyanate | 92 % en poids |
| résine époxy du bisphénol A | 7 % en poids |
| benzoquinone | 1 % en poids |

Ce vernis ne présente qu'une faible variation de viscosité après un stockage de 100 jours à température ambiante, alors qu'on observe pour le même vernis ne contenant pas de benzoquinone, un doublement de la viscosité en moins de 20 jours.

Ce vernis peut être utilisé pour imprégner un ruban poreux formé de papier de mica et d'un tissu de verre, collé par une résine époxy sur le papier de mica, contenant 1 g/m² de chlorure de benzyltriméthy-lammonium, à la place des vernis stabilisés par un anhydride organique des exemples 1 à 8.

### Exemple 10

On prépare un vernis composé de :

| | |
|---|---|
| 2,4-toluène diisocyanate 80 % en poids | |
| 2,6-toluène diisocyanate 20 % en poids | 92,9 % en poids |
| résine époxy du bisphénol A | 10 % en poids |
| benzoquinone | 1 % |

Ce vernis ne présente pas d'évolution de viscosité après 100 jours de stockage à la température ambiante, alors qu'on observe pour le même vernis sans benzoquinone un doublement de viscosité en 40 jours.

Ce vernis peut être utilisé comme celui de l'exemple 9.

### Exemple 11

On prépare un vernis composé de :

| | |
|---|---|
| 4-4' Diphényl méthane diisocyanate | 92 % en poids |
| résine époxy novolaque (équivalent époxy 170) | 7 % en poids |
| benzoquinone | 1 % en poids |

## Tableau 1

### Caractéristiques des vernis catalysés avec un sel d'ammonium quaternaire

| | VISCOSITE à 20°C | Perte de Poids après 1000H à 230°C dans l'air | Perte de poids après 1000H à 230°C dans l'azote | Allongement initial mesuré à 230°C | Allongement après 1000H à 230°C mesure à 230°C | Résistance à la traction initiale mesure à 200°C $(kg/cm^2)$ | Résistance à la traction après 1000H à 230°C mesure à 200°C $(kg/cm^2)$ |
|---|---|---|---|---|---|---|---|
| Exemple 1 | 170 cpo | 5,5% | 2,7% | 4% | 4% | 540 | 525 |
| Exemple 2 | 205 cpo | 5,0% | 2,1% | 3% | 3% | 590 | 560 |
| Exemple 3 | 265 cpo | 6,2% | 3,1% | 5% | 4% | 480 | 470 |
| Exemple 4 | 12 cpo | 7,8% | 4,3% | 4% | 3% | 470 | 310 |
| Exemple 5 | 20 cpo | 6,9% | 4,0% | 4% | 3% | 500 | 320 |
| Exemple 6 | 190 cpo | 5,1% | 2,2% | 4% | 3% | 560 | 530 |
| Exemple 7 | 150 cpo | 7% | 3,4% | 6% | 4% | 460 | 430 |
| Exemple 8 | 30 cpo | 6,1% | 3,0% | 4% | 3% | 490 | 470 |

0 135 689

## Tableau 2

### Caractéristiques électriques du système ruban + vernis imprégné et polymérisé

| | tg δ 200°C sous 1,2 kv initial | tg δ 230°C sous 1,2 kv initial | Constante diélectrique | | tg δ à 200°C sous 1,2 kv après 1000H à 230°C |
|---|---|---|---|---|---|
| | | | ε à 200°C sous 1,2 kv initial | ε à 230°C sous 1,2 kv initial | |
| Exemple 1 | 0,097 | 0,18 | 4,5 | 5,2 | 0,078 |
| Exemple 2 | 0,083 | 0,15 | 4,3 | 5,0 | 0,069 |
| Exemple 3 | 0,14 | 0,21 | 5,3 | 5,6 | 0,10 |
| Exemple 4 | 0,10 | 0,22 | 4,6 | 5,3 | 0,087 |
| Exemple 5 | 0,096 | 0,17 | 4,7 | 5,2 | 0,085 |
| Exemple 6 | 0,090 | 0,16 | 4,3 | 5,0 | 0,071 |
| Exemple 7 | 0,31 | 0,41 | 5,8 | 6,2 | 0,27 |
| Exemple 8 | 0,085 | 0,19 | 4,3 | 5,5 | 0,071 |

0 135 689

Il ne présente qu'une faible variation de viscosité après 100 jours à la température ambiante, alors qu'on observe pour le même vernis sans benzoquinone un doublement de viscosité en moins de 15 jours. Ce vernis peut être utilisé comme ceux des exemples 9 et 10.

Exemple 11

Cycle d'imprégnation et de polymérisation d'un ruban poreux imprégné par un vernis selon l'un des exemples 1 à 10.

Un barreau de cuivre, de section droite 25 × 10 mm², entouré de cinq couches à demi-recouvrement du ruban poreux chargé de catalyseur, emprisonné dans une encoche de section droite 27,8 × 12,8 mm², est placé dans une cuve d'imprégnation où il est laissé dégazer 15 heures sous vide à la température ambiante.

Puis, sans interrompre le vide, on introduit dans la cuve une quantité de vernis suffisante pour que l'encoche soit submergée dans le vernis, durant au moins une heure.

La cuve est ensuite remise à la pression atmosphérique, puis portée sous une pression de 6 bars pendant au moins une heure.

Le cycle mise sous vide-mise en pression est effectué 3 fois de suite, puis s'achève par la mise à l'atmosphère à la fin de la 3è phase de mise sous pression.

Durant toute la durée des cycles, l'encoche doit être noyée dans le vernis.

On effectue alors la polymérisation de la résine en plaçant l'encoche contenant le barreau imprégné dans une étuve où elle est portée à la température de 130 °C en 1 h 30. Après un palier de 2 h à 130 °C, la température est portée à 150 °C, où a lieu un palier de 4 h.

Le traitement s'achève par une post-cuisson de 15 h à 200 °C.

## Revendications

1. Procédé d'isolation par imprégnation d'un bobinage électrique, à l'aide de résines à cycles isocyanurates et oxazolidones, dans lequel on enroule autour des conducteurs un ruban de tissu de verre et de papier de mica poreux chargé d'un sel d'ammonium quaternaire catalysant la condensation de dérivés isocyanates et époxy en cycles isocyanurates et oxazolidones, on imprègne le ruban d'un vernis comprenant un dérivé isocyanate et une résine époxy liquide, puis on soumet le ruban imprégné à un traitement thermique de polymérisation du vernis, caractérisé en ce que l'on emploie comme sel d'ammonium quaternaire un halogénure de benzyltrialkylammonium à chaîne alkyle contenant au plus 3 atomes de carbone.

2. Procédé selon la revendication 1, caractérisé en ce que l'halogénure de benzyl-trialkylammonium est le chlorure de benzyl-triméthylammonium ou le chlorure de benzyl-triéthylammonium.

3. Procédé selon les revendications 1 ou 2, caractérisé en ce que l'on incorpore l'halogénure de benzyltrialkylammonium à l'état solide au ruban de tissu de verre et de papier de mica poreux.

4. Procédé selon l'une des revendications 1 à 3, caractérisé en ce que la proportion d'halogénure de benzyl-trialkylammonium est de 0,2 à 5 % en poids du vernis, et de préférence de 0,8 à 1,5 % en poids du vernis.

5. Procédé selon l'une des revendications 1 à 4, caractérisé en ce que le vernis est additionné d'un inhibiteur de condensation constitué par un acide minéral ou organique, un anhydride organique ou un composé organique capteur d'électrons.

6. Procédé selon la revendication 5, caractérisé en ce que le vernis est additionné d'un inhibiteur de condensation constitué par un acide minéral ou organique, un anhydride organique ou un composé organique capteur d'électrons π.

7. Procédé selon les revendications 5 ou 6, caractérisé en ce que la quantité d'inhibiteur ajoutée au vernis est comprise entre 0,02 et 1 % en poids, et de préférence entre 0,05 et 0,3 % en poids.

8. Procédé selon l'une des revendications 1 à 7, caractérisé en ce que le vernis comprend 7 à 25 équivalents isocyanate pour un équivalent époxy.

9. Vernis sans solvant à base de dérivés isocyanates et de résines époxy liquides, stabilisé contre l'accroissement de viscosité au stockage, caractérisé en ce qu'il contient de 0,02 à 1 % en poids, et de préférence de 0,05 à 0,3 % en poids, rapportés à la masse totale du vernis, d'un inhibiteur constitué par un acide minéral ou organique ou un anhydride organique, ou bien un composé organique capteur d'électrons π.

10. Vernis sans solvant selon la revendication 9, caractérisé en ce que son inhibiteur est constitué par un composé du groupe formé par l'acide phosphorique, l'anhydride maléique, l'anhydride acétique, l'anhydride phtalique, l'hydroquinone, la benzoquinone et l'azobisisobutyrolactone.

11. Dispositif d'isolation par imprégnation d'un bobinage électrique, comprenant un ruban de tissu de verre et de papier de mica poreux chargé d'un sel d'ammonium quaternaire catalysant la condensation de dérivés isocyanates et époxy en cycles isocyanurates et oxazolidones, imprégné d'un vernis formé à partir d'un dérivé isocyanate et d'une résine époxy liquide, durcis par traitement thermique en présence de sel d'ammonium quaternaire, est caractérisé en ce que le sel d'ammonium quaternaire est un halogénure de benzyl-trialkylammonium à chaîne alkyle contenant au plus 3 atomes de carbone.

12. Dispositif selon la revendication 11, caractérisé en ce que l'halogénure de benzyl-trialkylammonium est le chlorure de benzyl-triéthylammonium ou le chlorure de benzyl-triéthylammonium.

13. Dispositif selon les revendications 11 ou 12, caractérisé en ce que son vernis est additionné d'un inhibiteur de condensation constitué par un acide minéral ou organique, un anhydre organique ou un composé organique capteur d'électrons π.

14. Dispositif selon l'une des revendications 11 à 13, caractérisé en ce que le vernis comprend 7 à 25 équivalents isocyanate pour un équivalent époxy.

## Claims

1. A method of insulating an electric winding by impregnation with resins containing isocyanurate and oxazolidone cycles, in which conductors are wrapped with a glass cloth and porous mica paper tape loaded with a quaternary ammonium salt catalyzing the condensation of isocyanate and epoxy derivatives into isocyanurate and oxazolidone cycles, the tape is impregnated with a varnish containing an isocyanate derivative and a liquid epoxy resin, then the impregnated tape is submitted to a thermal treatment for polymerizing the varnish, characterized in that a benzyl-trialkylammonium halide with an alkyl chain containing at the most 3 carbon atoms is used as quaternary ammonium salt.

2. A method according to claim 1, characterized in that the benzyl-trialkylammonium halide is the benzyl-trimethylammonium chloride or the benzyl-triethylammonium chloride.

3. A method according to claims 1 or 2, characterized in that the benzyl-trialkylammonium halide is incorporated in the solid state into the glass cloth and porous mica paper tape.

4. A method according to one of claims 1 to 3, characterized in that the benzyltrialkylammonium halide proportion is from 0,2 to 5 % by weight of the varnish, and preferably from 0,8 to 1,5 by weight of the varnish.

5. A method according to one of claims 1 to 4, characterized in that the varnish contains a condensation inhibitor constituted by a mineral or organic acid, an organic anhydride or an organic compound catching π electrons.

6. A method according to claim 5, characterized in that the varnish contains a condensation inhibitor constituted by a mineral or an organic acid, an organic anhydride or an organic compound catching π electrons.

7. A method accoprding to claims 5 or 6, characterized in that the quantity of inhibitor added to the varnish is comprised between 0,02 and 1 % by weight, and preferably between 0,05 and 0,3 % weight.

8. A method according to one of claims 1 to 7, characterized in that the varnish comprises 7 to 25 isocyanate equivalents per epoxy equivalent.

9. A varnish without solvent based on liquid isocyanate derivatives and epoxy resins, stabilized against viscosity increase during storage, characterized in that it contains from 0,02 to 1 % by weight, and preferably from 0,05 to 0,3 % by weight, based on the varnish total weight, of an inhibitor constituted by a mineral or an organic acid or an organic anhydride or an organic compound catching π electrons.

10. A varnish without solvent according to claim 9, characterized in that its inhibitor is constituted of a compound of the group formed by phosphoric acid, maleic anhydride, acetic anhydride, phtalic anhydride, hydroquinone, benzoquinone and azobisisobutyrolactone.

11. A device for insulation of an electric winding by impregnation, including a glass cloth and porous mica paper tape loaded with a quaternary ammonium salt catalyzing the condensation of isocyanate and epoxy derivatives into isocyanurate and oxazolidone cycles, impregnated with a varnish made from an isocyanate derivative and a liquid epoxy resin, and hardened by thermal treatment in the presence of a quaternary ammonium salt, characterized in that the quaternary ammonium salt is a benzyl-trialkylammonium halide having an alkyl chain containing at the most 3 carbon atoms.

12. A device according to claim 11, characterized in that the benzyl-trialkylammonium halide is the benzyl-trimethylammonium chloride or the benzyl-triethylammonium chloride.

13. A device according to claims 11 or 12, characterized in that a condensation inhibitor constituted by a mineral or organic acid, an organic anhydride or an organic compound catching π electrons has been added to the varnish.

14. A device according to one of claims 11 to 13, characterized in that the varnish comprises 7 to 25 equivalents of isocyanate per epoxy equivalent.

## Patentansprüche

1. Verfahren zur Isolierung einer elektrischen Wicklung durch Tränken mit Harzen, die Isocyanat- und Oxazolidon-Ringe aufweisen, wobei man um Leiter ein Band aus Glasgewebe und poröeinem Glimmerpapier, das mit einem quaternären Ammoniumsalz versehen ist, das die Kondensation der Isocyanat- und Epoxyderivate zu Isocyanurat- und Oxazolidon-Ringen katalysiert, wickelt, worauf man das Band mit einem Lack tränkt, der ein Isocyanatderivat und ein flüssiges Epoxyharz enthält, und dann das getränkte Band einer Wärmebehandlung zur Polymerisation des Lacks unterzieht, dadurch gekennzeichnet, daß man als quaternäres Ammoniumsalz ein Benzyltrialkylammoniumhalogenid mit einer Alkylkette mit höchstens 3 Kohlenstoffatomen verwendet.

2. Verfahren nach Anspruch 1, dadurch gekennzeichnet, daß das Benzyl-trialkylammoniumhalogenid das Benzyl-trimethylammoniumchlorid oder das Benzyl-trimethylammoniumchlorid ist.

3. Verfahren nach Anspruch 1 oder 2, dadurch gekennzeichnet, daß man das Benzyl-trialkylammoniumhalogenid im festen Zustand in das Band aus Glasgewebe und porösem Climmerpapier einarbeitet.

4. Verfahren nach einem der Ansprüche 1 bis 3, dadurch gekennzeichnet, daß der Anteil des Benzyltrialkylammoniumhalogenids zwischen 0,2 und 5 Gew.% des Lacks und vorzugsweise zwischen 0,8 und 1,5 Gew.% des Lacks liegt.

5. Verfahren nach einem der Ansprüche 1 bis 4, dadurch gekennzeichnet, daß dem Lack ein Kondensationsinhibitor zugefügt wird, der aus einer Mineralsäure oder einer organischen Säure, einem organischen Anhydrid oder einer als $\pi$-Elektronenfänger wirkenden organischen Verbindung besteht.

6. Verfahren nach Anspruch 5, dadurch gekennzeichnet, daß dem Lack ein Kondensationsinhibitor zugefügt wird, der aus einer Mineralsäure oder einer organischen Säure, einem organischen Anhydrid oder einer als $\pi$-Elektronenfänger wirkenden organischen Verbindung besteht.

7. Verfahren nach den Ansprüchen 5 oder 6, dadurch gekennzeichnet, daß die Menge des dem Lack zugefügten Inhibitors zwischen 0,02 und 1 Gew.%, und vorzugsweise zwischen 0,05 und 0,3 Gew.% liegt.

8. Verfahren nach einem der Ansprüche 1 bis 7, dadurch gekennzeichnet, daß der Lack 7 bis 25 Äquivalente Isocyanat pro Epoxy-Äquivalent enthält.

9. Lösungsmittelfreier Lack auf der Basis von flüssigen Isocyanatderivaten und Epoxharzen, der gegen das Ansteigen der Viskosität während der Lagerung stabilisiert ist, dadurch gekennzeichnet, daß er 0,02 bis 1 Gew.%, und vorzugsweise 0,05 bis 0,3 Gew.%, bezogen auf die Gesamtmasse des Lacks, eines Inhibitors enthält, der von einer Mineralsäure, einer organischen Säure oder einem organischen Anhydrid oder aber einer als $\pi$-Elektronenfänger wirkenden organischen Verbindung gebildet wird.

10. Lösungsmittelfreier Lack nach Anspruch 9, dadurch gekennzeichnet, daß sein Inhibitor aus einer Verbindung aus der Gruppe, die aus Phosphorsäure, Maleinsäureanhydrid, Essigsäureanhydrid, Phthalsäureanhydrid, Hydrochinon, Benzochinon und Azobisisobutyrolacton besteht, gebildet wird.

11. Vorrichtung zur Isolierung einer elektrischen Wicklung durch Imprägnierung mit einem Band aus Glasgewebe und porösem Glimmerpapier, dem ein quaternäres Ammoniumsalz zugefügt ist, das die Kondensation der Isocyanat- und Epoxyderivate zu Isocyanat- und Oxazolidon-Ringen katalysiert, getränkt mit einem Lack, der aus einem Isocyanatderivat und einem flüssigen Epoxyharz gebildet und durch Wärmehandlung in Gegenwart eines quaternären Ammoniumsalzes gehärtet worden ist, dadurch gekennzeichnet, daß das quaternäre Ammoniumsalz ein Benzyltrialkylammoniumhalogenid mit einer Alkylkette mit höchstens 3 Kohlenstoffatomen ist.

12. Vorrichtung nach Anspruch 11, dadurch gekennzeichnet, daß das Benzyl-trialkylammoniumhalogenid das Benzyl-trimethylammoniumchlorid oder das Benzyl-triethylammoniumchlorid ist.

13. Vorrichtung nach den Ansprüchen 11 oder 12, dadurch gekennzeichnet, daß ihr Lack einen Kondensationsinhibitor enthält, der aus einer Mineralsäure oder einer organischen Säure, einem organischen Anhydrid oder einer als $\pi$-Elektronenfänger wirkenden organischen Verbindung besteht.

14. Vorrichtung nach einem der Ansprüche 11 bis 13, dadurch gekennzeichnet, daß der Lack 7 bis 25 Äquivalente Isocyanat pro Epoxy-äquivalent aufweist.